(19) Europäisches Patentamt
European Patent Office
Office européen des brevets

(11) **EP 1 847 962 B1**

(12) **EUROPEAN PATENT SPECIFICATION**

(45) Date of publication and mention
of the grant of the patent:
**13.04.2011 Bulletin 2011/15**

(51) Int Cl.:
***G06T 9/00*** *(2006.01)*

(21) Application number: **07114267.3**

(22) Date of filing: **20.01.1999**

(54) **Compression of partially masked image data**

Kompression von teilweise maskierten Bilddaten

Compréssion de données d'images partiellement masquées

(84) Designated Contracting States:
**DE FR GB**

(30) Priority: **20.01.1998 US 71839**

(43) Date of publication of application:
**24.10.2007 Bulletin 2007/43**

(62) Document number(s) of the earlier application(s) in
accordance with Art. 76 EPC:
**99903232.9 / 1 050 014**

(73) Proprietor: **AT&T Corp.**
**New York, NY 10013-2412 (US)**

(72) Inventors:
  • **Bottou, Leon**
  **Highlands, New Jersey 07732 (US)**
  • **Pigeon, Steven P**
  **Blainville Québec J7C 1Z9 (CA)**

(74) Representative: **Suckling, Andrew Michael**
**Marks & Clerk LLP**
**4220 Nash Court**
**Oxford Business Park South**
**Oxford**
**OX4 2RU (GB)**

(56) References cited:
  • YIN F-F ET AL: "ONCOLOGIC IMAGE COMPRESSION USING BOTH WAVELET AND MASKING TECHNIQUES" MEDICAL PHYSICS, AIP, MELVILLE, NY, US, vol. 24, no. 12, December 1997 (1997-12), pages 2038-2042, XP000767423 ISSN: 0094-2405

  • HYUNGJUN KIM: "Image compression using biorthogonal wavelet transforms with multiplierless 2-D filter mask operation" IMAGE PROCESSING, 1997. PROCEEDINGS., INTERNATIONAL CONFERENCE ON SANTA BARBARA, CA, USA 26-29 OCT. 1997, LOS ALAMITOS, CA, USA,IEEE COMPUT. SOC, US, vol. 1, 26 October 1997 (1997-10-26), pages 648-651, XP010254254 ISBN: 0-8186-8183-7
  • HOMER H CHEN ET AL: "A Block Transform Coder for Arbitrarily Shaped Image Segments" PROCEEDINGS OF THE INTERNATIONAL CONFERENCE ON IMAGE PROCESSING (ICIP) AUSTIN, NOV. 13 - 16, 1994, LOS ALAMITOS, IEEE COMP. SOC. PRESS, US, vol. VOL. 1 CONF. 1, 13 November 1994 (1994-11-13), pages 85-89, XP000926352 ISBN: 0-8186-6952-7
  • ZHU B ET AL: "Image coding with wavelet representations, edge information and visual masking" PROCEEDINGS OF THE INTERNATIONAL CONFERENCE ON IMAGE PROCESSING. (ICIP). WASHINGTON, OCT. 23 - 26, 1995, LOS ALAMITOS, IEEE COMP. SOC. PRESS, US, vol. VOL. 3, 23 October 1995 (1995-10-23), pages 582-585, XP010196816 ISBN: 0-7803-3122-2

Remarks:
The file contains technical information submitted after the application was filed and not included in this specification

EP 1 847 962 B1

**Description**

**BACKGROUND OF THE INVENTION**

Books and magazines often contain pages containing audacious mixtures of color images and text. The present invention relates to a fast and efficient method of coding partially-masked image information of such documents by wavelet coding without wasting bits on the image data that is masked by foreground text.

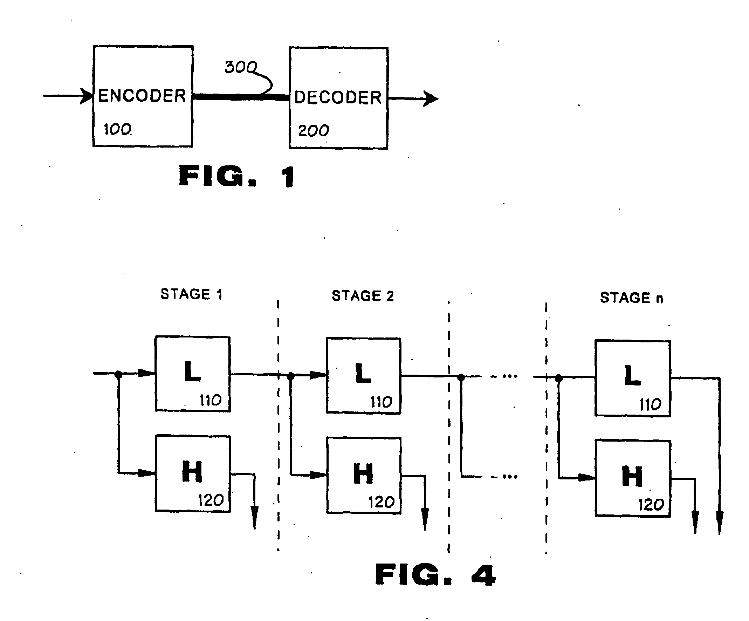

A simplified block diagram of a wavelet coding system is shown in FIG. 1. The system includes an encoder 100 and a decoder 200. The encoder 100 codes input image information according to wavelet compression techniques and outputs coded image data to a channel 300. The coded image data includes wavelet coefficients representing the image data. The decoder 200 retrieves the coded image data from the channel 300 and decodes it according to wavelet decompression techniques.

Multi-resolution wavelet decomposition is one of the most efficient schemes for coding color images. These schemes involve several operations: color space transform, image decomposition, coefficient quantization and coefficient coding.

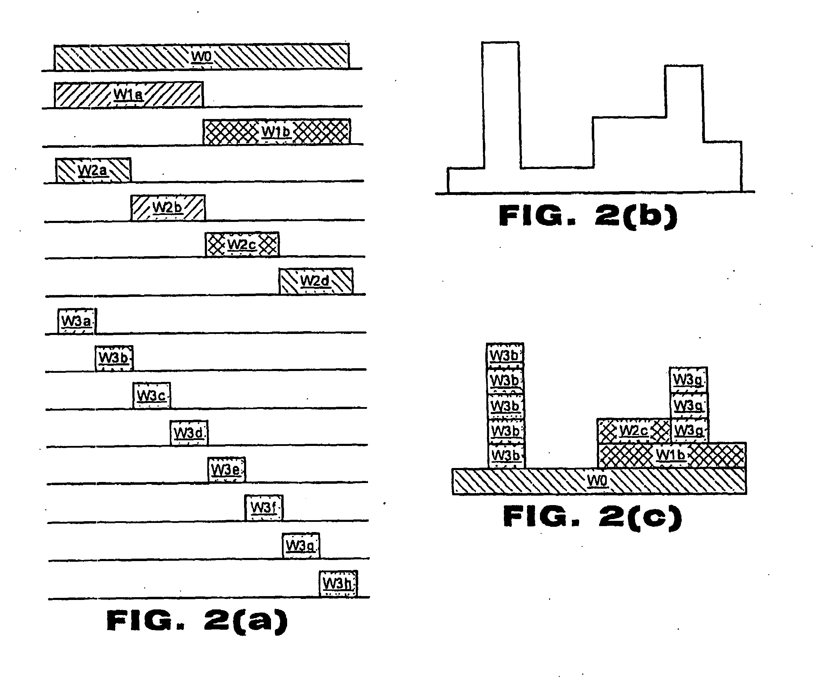

Image information to be coded is represented as a linear combination of locally supported wavelets. An example of wavelet support is shown in F1G. 2(a). Wavelets extend over a predetermined area of image display. For the length of every wavelet such as $W_0$, two other wavelets $W_{1a}$ and $W_{1b}$ extend half of its length. The length of each underlying wavelet $W_{1a}$, $W_{1b}$ is itself supported by two other wavelets $W_{2a}$, $W_{2b}$, $W_{2c}$ and $W_{2d}$. This support structure may continue until a wavelet represents only a single pixel.

Image data may be coded as a linear combination of the wavelets. Consider the image data of FIG. 2(b). As shown in FIG. 2(c), the image data may be considered as a linear combination of the wavelets of FIG. 2(a). To represent the image data, only the coefficients of the wavelets that represent the image data need by coded. The image data of FIG. 2(b) may be coded as:

| $W_0$ | $W_{1a}$ | $W_{1b}$ | $W_{2a}$ | $W_{2b}$ | $W_{2c}$ | $W_{2d}$ | $W_{3a}$ | $W_{3b}$ | $W_{3c}$ | $W_{3d}$ | $W_{3e}$ | $W_{3f}$ | $W_{3g}$ | $W_{3h}$ |
|-------|----------|----------|----------|----------|----------|----------|----------|----------|----------|----------|----------|----------|----------|----------|
| 1 | 0 | 1 | 0 | 0 | 1 | 0 | 0 | 5 | 0 | 0 | 0 | 0 | 3 | 0 |

Because most of the wavelet coefficients are zero, the coefficients themselves may be coded using highly efficient coding methods.

The linear combination of coefficients can be expressed in matrix notation as:

$$Aw = x \tag{1}$$

where w is a vector of wavelet coefficients, x is a vector of pixel values, and A is a square matrix whose columns represent the wavelet basis. Matrix A usually describes an orthogonal or nearly orthogonal transformation. When a decoder 200 is given the wavelet coefficient, then it may generate the image data x using the process of Equation. 1. Efficient multi-scale algorithms perform image decomposition (i.e. computing $A^{-1}x$) and image reconstruction (i.e. computing Aw) in time proportional to the number of pixels in the image.

In practice, most image data is smooth. It differs from the exemplary image data of FIG. 2(b) in that the image data generally does not possess abrupt variations in image value. Whereas the image data used in the example of FIG. 2(b) possesses significant energy in the coefficients of shorter wavelets, natural image data does not often possess energy in these coefficients.

The image local smoothness ensures that the distribution of the wavelet coefficients is sharply concentrated around zero. High compression efficiency is achieved using quantization and coding schemes that take advantage of this peaked distribution.

When a unitary source of information, such as a page of a book or magazine, contains both text and image data, the text may be considered as a "mask" that overlays image data beneath the text. Coding of any part of the image data beneath the masking text becomes unnecessary because the text will mask it from being observed. In the case of wavelet encoding, masked wavelets need not be coded.

When image data is masked, the mask blocks image data thereunder from being observed. Coding errors that are applied to masked image data are unimportant because the masked image data will be replaced with data from the mask. Also, the mask disrupts the smoothness of the image data. It introduces sharp differences in the value of the image data at the boundaries between the image and the foreground text. Coding of the sharp differences would cause significant energy to be placed in the short wavelet coefficients, which would cause coding inefficiencies to arise in coding the image data. Such coding inefficiencies are particularly undesirable because coding errors that occur below the mask will be unnoticed at the decoder where the mask will overlay the erroneous image data. Accordingly, there is a need in the art for a image coder that codes masked image data efficiently.

Yin F-F et al, in 'Oncologic Image Compression Using Both Wavelet And Masking Techniques' Medical Physics, American Institute of Physics. New York, US, Vol. 24, No. 12, 1 December 1997 (1997-12-01), pages 2038-2042, XP000767423 ISSN: 0094-2405, describe an algorithm to compress oncologic images using both wavelet transform and field masking methods. A compactly supported wavelet transform is used to decompose the original image into high- and low-frequency subband images. The region-of-interest (ROI) inside an image, such as an irradiated field in an electronic portal image, is identified using an image segmentation technique and is then used to generate a mask.

## SUMMARY OF THE INVENTION

The present invention provides a method of coding an image as defined in claim 1, and a system for coding an image as defined in claim 12. Preferred features of the invention are set out in the dependent claims.

## SUMMARY OF THE INVENTION

The disadvantage of the prior art are alleviated to a great extent by a successive projections algorithm that codes partially-masked image data with a minimum number of wavelet coefficients. According to the successive projections algorithm unmasked image information is coded by wavelet decomposition. For those wavelets whose energy lies substantially below the mask, the wavelet coefficients are canceled. Image reconstruction is performed based on the remaining coefficients. For the image information that lies outside of the mask, the reconstructed image information is replaced with the original image information. The wavelet coding, coefficient cancellation, and image reconstruction repeats until convergence is reached.

The present invention also provides a simple and direct numerical method for coding the image information in a manner that obtains quick convergence. In a first embodiment, quick convergence is obtained by performing masked wavelet encoding in stages, each stage associated with a predetermined wavelet scale. By advancing the stages from finest scale to coarsest scale, coefficients of masked wavelets are identifies early in the coding process. In a second embodiment, quick convergence is obtained by introducing overshoot techniques to the projections of images.

## BRIEF DESCRIPTION OF THE DRAWINGS

FIG. 1 illustrates a coding system in which wavelet image coding may be applied.

FIG. 2(a) illustrates wavelets.

FIG. 2(b) illustrates image data that may be coded by wavelets.

FIG. 2(c) illustrates a linear combination of the wavelets of FIG. 2(a) that represents the image data of FIG. 2(b).

FIG. 3 is a graph illustrating convergence of classic wavelet encoders that code partially-masked image information.

FIG. 4 is a block diagram of a wavelet encoder adapted for use with the present invention.

FIG. 5 is a graph illustrating convergence of the wavelet encoder of the present invention.

## DETAILED DESCRIPTION

The present invention provides a coding technique adopted to code partially-masked image data with a minimum number of wavelet coefficients. It is called the "Successive Projections Algorithm." The technique replaces masked pixels with a smooth interpolation of non-masked pixels to improve coding efficiencies.

The present invention also proposes two techniques to improve convergence of the success projections algorithm. The first technique, labeled the "Multi-Scale Successive Projections Method," breaks the wavelet decomposition stage of encoding into several stages. In the first stage, wavelet encoding is performed on the smallest wavelets. In each stage thereafter, successively larger wavelets are encoded. Quick convergence is obtained because the smaller wavelets are likely to possess significant energy below the mask. They are identified in the early stages. In the latter stages, many fewer iterations of image reconstruction and coefficient recalculation are needed because the larger wavelets are not likely to posses significant energy below the mask.

The second technique, called the "Overshooting Successive Projections Method," causes projections of images to the sets P and Q to be subject to overshooting. Quick convergence is obtained be requiring fewer iterations of image reconstruction and coefficient recalculation.

**Successive Projections**

According to the successive projections algorithm, an image is represented as pixels. The visible pixels (i.e. pixels that are not masked) are never affected by the coefficients of wavelets whose support is entirely located below the mask. Therefore, a simple idea for solving the problem consists in either: (a) skipping these coefficient while coding, or (b) setting them to zero, which is the most code-efficient value. The first solution saves a few bits, but requires that the mask be known during decoding. The second solution does not suffer from this constraint; the compressed image file can be decoded according to normal wavelet techniques regardless of the mask.

Most of the information about masked background pixels is carried by wavelets whose support is partially-masked only. Canceling the coefficient of a partially-masked wavelet changes the visible pixels located outside the mask. The coefficient of other wavelets must be adjusted to compensate for this effect. The adjusted coefficients represent an image whose visible pixels exactly match the corresponding pixels of the target image. The masked pixels however can be different. Their value is simply a code-efficient interpolation of the visible pixels.

Reordering the pixel vector x and the wavelet coefficient vector w allows a block-decomposition of equation (1):

$$Aw = \begin{pmatrix} B & C \\ D & E \end{pmatrix} \cdot \begin{pmatrix} w' \\ w'' \end{pmatrix} = \begin{pmatrix} x' \\ x'' \end{pmatrix} = x \qquad (2)$$

where x" represents the masked pixels, x' represents the visible pixels, w" represents the wavelet coefficients to be canceled, and w' represents the remaining wavelet coefficients. The algorithm seeks adjusted wavelet coefficients that solve:

$$\begin{aligned} Bw' &= x' \\ w'' &= 0 \end{aligned} \qquad (3)$$

Equation (3) has solutions if the rank of the rectangular matrix B is equal to the number of remaining, non-canceled wavelet coefficients. The rank condition, however, implies that the number of canceled wavelet coefficients must be smaller than the number of masked pixels.

Given a mask and a wavelet decomposition, canceled wavelet coefficients (called the "masked coefficients") must be chosen. The choice of the masked coefficients impacts the resulting file size. Canceling a wavelet whose energy is significantly located outside the mask requires a lot of adjustments on the remaining coefficients. These adjustments are likely to use coefficients that would be null otherwise. Empirically, good results are achieved by canceling wavelet coefficients when at least half of the wavelet energy is located below the mask.

Once the set of masked coefficients is selected, equation (3) may be solved. There are many techniques for solving sparse linear systems. There is however a method which relies only on the efficient wavelet decomposition and reconstruction algorithms.

Every image can be represented in pixel coordinates (i.e. a collection of pixel values) or in wavelet coordinates (i.e. a collection of wavelet coefficients). The coordinate transformation is described by matrix A. The solutions belong to the intersection of the following sets of images:

- The set P of all images whose pixels located outside the mask are equal to the corresponding pixels in the image being compressed.
  This set is a closed convex affine subspace of the image space.
- The set Q of all images whose wavelet representation contains zeroes for all masked coefficients. This set also is a closed convex affine subspace of the image space.

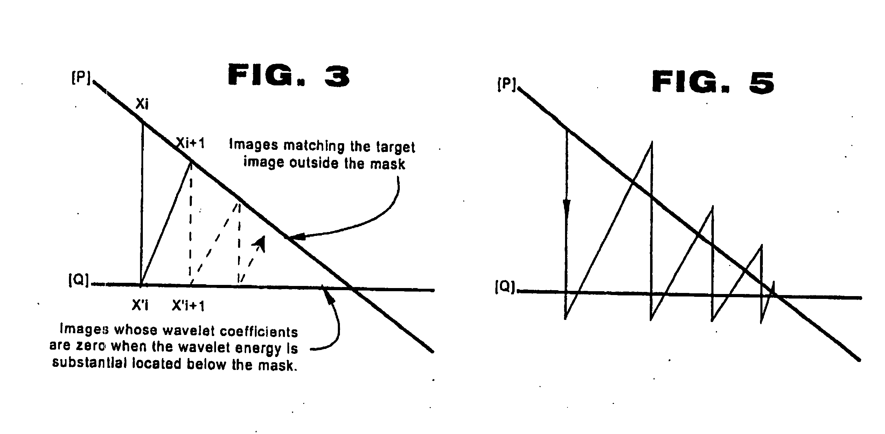

Let P (respectively Q) be the projection operator on set P (respectively Q). The initial image $x_0$ already is an

element of set P. As shown in FIG. 3, the image is projected successively upon sets Q and P:

$$
\begin{aligned}
x'_i &= Qx_i && \in Q \\
x_{i+1} &= Px'_i = PQx_i && \in P
\end{aligned}
\qquad (4)
$$

This sequence is known to converge toward a point in the intersection of convex sets P and Q provided that the intersection is not empty. The simplest version of the successive projections algorithm consists of the following steps:

i) Initialize a buffer with the pixel values of the initial image.
ii) Perform the wavelet decomposition.
iii) Set all masked wavelet coefficients to zero (projection Q).
iv) Perform the image reconstruction.
v) Reset all visible pixels to their value in the initial image (projection P).
vi) Loop to step (ii) until convergence is reached.

Convergence may be monitored by measuring the distance between the visible pixels of the initial image and the corresponding pixels of the image reconstructed in step (iv).

**Convergence Speed**

This section presents a bound on the convergence speed and a criterion on the existence of a solution. The bound depends only on the set of masked pixels and the set of masked coefficients. It therefore is a useful element for selecting the masked coefficients.

Since $x_{i+1}=Q(x_{i+1})$ is the orthogonal projection of $x_{i+1}$ on Q, we have (cf. FIG. 3):

$$
\| x_{i+1} - x'_i \|^2 = \| x_{i+1} - x'_{i+1} \|^2 + \| x'_{i+1} - x'_i \|^2 \geq \| x_{i+1} - x'_{i+1} \|^2
\qquad (5)
$$

The contraction ratio therefore is bounded by:

$$
\frac{\| x_{i+1} - x'_{i+1} \|^2}{\| x_i - x'_i \|^2} \geq \frac{\| x_{i+1} - x'_i \|^2}{\| x_i - x'_i \|^2}
\qquad (6)
$$

Vector $x_i - x''_i = x_i - Q(x_i)$ belongs the linear subspace orthogonal to Q. It can be written as a linear combination of the wavelets $e_j$ corresponding the masked coefficients resulting in:

$$
x_i - x'_i = \sum_j \alpha_j e_j
\qquad (8)
$$

$$
x_{i+1} - x'_i = x_i - x'_i - P(x_i - x'_i) = \sum_j \alpha_j (e_j - P(e_j))
\qquad (7)
$$

Vector $e_j - P(e_j)$ represents the part of wavelet $e_j$ which is not located below the mask. These clipped wavelets are completely defined by the mask and by the set of masked coefficients. Combining results (6), (7) and (8) provides a bound $\lambda$ on the contraction ratio. This bound depends only on the set of masked pixels and the set of masked coefficients.

$$\frac{\|x_{l+1} - x'_{l+1}\|^2}{\|x_l - x'_l\|^2} \leq \sup_{\left\|\sum_j \alpha_j e_j\right\| = 1} \left\|\sum_j \alpha_j(e_j - P(e_j))\right\| = \lambda \qquad (9)$$

The right-hand side of inequality (9) easily is interpreted. Adding a unit vector to the masked coefficients causes a perturbation on the visible pixels. The norm of this perturbation is less than lambda. Quantity $\lambda$ naturally depends on the energy and shape of the part of the masked wavelets that overlaps the visible pixels.

An argument similar to equation (5) ensures that $\|x_{l+1} - x_l\| \leq \|x_l - x'_l\|$. This result and inequality (9) provide bounds on the convergence speed:

$$\|x_{l+1} - x_l\| \leq \|x_l - x'_l\| \leq \lambda^l \|x_0 - x'_0\| \qquad (10)$$

Condition $\lambda < 1$ therefore is a sufficient condition for ensuring that both sequences $(x_i) \varepsilon P$ and $(x'_i) \varepsilon Q$ converge geometrically to a same point $x^*$. The limit $x^*$ belongs to both P and Q because these sets are closed sets.

This result defines a remarkably fast convergence. The successive projection method reaches a solution with a predetermined accuracy after a number of iterations proportional to the logarithm of the number $N_m$ of masked pixels only, as shown by equation (10) and the following bound:

$$\|x_0 - x'_0\| \leq \|x_0 - x^*\| + \|x'_0 - x^*\| \leq 2\|x_0 - x^*\| \leq 2\sqrt{N_m}$$

As a comparison, solving equation (3) with a typical sparse linear system technique, like the conjugate gradients method, would require a number of iterations proportional to the number $N_v$ of visible pixels.

Thus, the iterative nature of the successive projections algorithm requires repetitive calculation of wavelet coefficients, reconstruction of image data and re-calculation of wavelet coefficients. It introduces undesired delay to image data encoding. Any technique that improves convergence of the successive projections algorithm improves performance of the wavelet encoder. It would reduce the cost of wavelet encoding. Accordingly, there is a need in the art for a fast and efficient method of coding partially-masked image data by wavelet coding techniques.

**Multi-scale Successive Projections**

The multi-scale nature of the wavelet decomposition algorithm provides a way to improve the value of $\lambda$ and therefore improve the convergence speed.

Developing the norm of the pixel perturbation term in inequality (9) shows how quantity $\lambda$ depends on the shapes and the scales of the set of masked wavelets:

$$\left\|\sum_j \alpha_j(e_j - P(e_j))\right\|^2 = \sum_j \alpha_j^2 \|e_j - P(e_j)\|^2 \qquad (11)$$

$$+ \sum_{j \neq k} \alpha_j \alpha_k (e_j - P(e_j)) \cdot (e_k - P(e_k)) \qquad (12)$$

The first terms of the sum (11) depends on the norm of the clipped wavelets $e_j - P(e_j)$. Since the wavelets $e_j$ are normalized, and since only those wavelets whose support is substantially masked are canceled, the norm of the clipped wavelets is a small number (typically smaller than ½). The second term (12) depend on the overlaps between clipped wavelets. Clipped wavelets of similar scale (i.e. wavelets whose support has identical size) are not likely generate much overlap, because they are designed to cover the pixel space efficiently. Large scale wavelets, however, overlap many small scale wavelets. These overlaps drive up the value of λ.

Multi-scale wavelet decomposition algorithms factor the decomposition (i.e. multiplying the image pixel by matrix $A^{-1}$) into a sequence of identical stages (see FIG. 4). Each stage consists of a low-pass linear filter 110 and a high-pass linear filter 120 applied to the input image. The low pass filter 110 returns a half resolution image which is provided as input to the next stage. The high-pass filter 120 returns all the coefficients of wavelets of a particular scale. The input image of each stage can be reconstructed by combining the output of both filters 110 and 120.

Since all the wavelets coefficients for the finest scale are produced by the first stage, all masked coefficients for this scale may be canceled using the successive projections algorithm above with a one stage decomposition only. This operation outputs a half-resolution image and a first set of coefficients fulfilling the masking conditions. The visible pixels of the initial image can be reconstructed by combining these outputs with the usual algorithms. The wavelet coefficients for the coarser scales are processed by repeating the operation for each successive stage in the wavelet transform. In other words, the multi-scale successive projections algorithm consists of the following operations:

i) Initialize the current image with the pixels of the image being compressed. Initialize the current mask with the set of pixels that will be masked by foreground objects.
ii) Apply the successive projections algorithm on the current image, using a one-stage wavelet decomposition only.
iii) Set the current image to the half resolution image returned by the low-pass wavelet filter. Set the current mask to a half resolution mask in which a pixel is masked if the corresponding pixels in the previous mask were masked.
iv) Loop to step (ii) until all stage of the multi-scale wavelet decomposition has been processed.

This method has been found to run one order of magnitude faster on realistic images than the simple successive projections algorithms above. This improvement is explained by the smaller values of A and by the lower complexity of the projection operations (each stage of the algorithm processes an image whose size is half the size of the previous image).

**Overshooting**

Another speedup can be obtained by applying an overshooting technique applied for successive projections onto convex sets. Instead of successive projections, the overshooting technique uses the following sequences (See, FIG. 5):

$$
\begin{aligned}
x'_i &= x_i + \gamma(Q(x_i) - x_i) \\
x_{i+1} &= x'_i + \gamma(P(x'_i) - x'_i)
\end{aligned}
\qquad (13)
$$

where $0 < \gamma < 2$. Choosing $\gamma = 1$ gives the successive projections algorithms as above. However, in high dimension spaces, choosing a higher value of $\gamma$ may lead to faster convergence. In our implementation, choosing $\gamma = 3/2$ in the multi-scale successive projections approximation has divided the convergence time by three.

The wavelet masking technique described herein significantly reduces an amount of coded image data necessary to represent partially-masked images. It can handle arbitrarily complex masks with reasonable computational requirements. There is no need to generate a wavelet basis having a support restricted to the visible pixels.

The wavelet masking techniques, however, converge much faster than the straightforward iterative processing techniques. Therefore, latency in coding of image data is reduced over the prior art.

The coding techniques described wherein provide an efficient coding technique for partially-masked image data. There is no requirement, however, that the image data be masked before it is input to the encoder. The encoder requires only a definition of image data outside the mask and a definition of the mask itself. The encoder operates with the same efficiency data when the image data under the mask has been masked or is left unaltered.

**Claims**

1. A method of coding an image using a wavelet coding technique, the image including a background image coded as a plurality of image coefficients and a coded foreground image, the method **characterised by** comprising:

cancelling any image coefficients associated with spatial areas occupied by the foreground image;
reconstructing image data in both image areas from remaining coefficients;
correcting image data for the reconstructed image data in the background image area; and

coding new image coefficients from the reconstructed image data.

2. The method of claim 1, wherein the background image and the foreground image occupy respective image areas.

3. The method of claim 1, wherein the plurality of image coefficients are wavelet coefficients.

4. The method of claim 1, further comprising:

coding the corrected reconstructed image data as a second plurality of image coefficients;
cancelling any second image coefficients associated with spatial areas occupied by the foreground image area; and
including remaining second image coefficients in an output signal.

5. The method of claim 4, wherein prior to including the remaining second image coefficients in the output signal, correcting the remaining second image coefficients according to background image data.

6. The method of claim 1, wherein the image coefficients associated with spatial areas occupied by the foreground image that are cancelled are associated with a mask.

7. The method of claim 1, wherein the steps of the method occur iteratively and wherein the image coefficients associated with spatial areas occupied by the foreground image that are cancelled are associated with a mask, the method further comprising:

correcting the reconstructed image data with original image data in unmasked image areas, the corrected reconstructed data to be used as image data to be coded in a subsequent iteration.

8. The method of claim 7, further comprising:

outputting the wavelet coefficients of a final iteration as a coded data signal.

9. The method of claim 1, wherein the image coefficients are masked wavelets having at least half of the wavelet energy located below a mask.

10. The method of claim 1, wherein the steps of the method are performed in a plurality of stages from a finest scale to a coarsest scale.

11. The method of claim 10, wherein at least one stage of coding comprises:

setting a resolution of the image to a scale of an instant stage;
generating transform coefficients representative of unmasked image data, the transform coefficients associated with the scale of the instant stage;
cancelling transform coefficients associated with a spatial area that coincides with a mask;
reconstructing image data based on the remaining coefficients;
correcting image data by, for any portion of the reconstructed image data located outside of the mask, substituting the corresponding original image data therefor, and
repeating the generating, cancelling and reconstructing steps at least once unless the reconstructed image data outside of the mask converges to the corresponding original image data.

12. A system for coding an image using a wavelet coding technique, the image including a background image coded as a plurality of image coefficients and a coded foreground image, the system **characterised by** comprising:

a module configured to cancel any image coefficients associated with spatial areas occupied by the foreground image;
a module configured to reconstruct image data in both image areas from remaining coefficients;
a module configured to correct image data for the reconstructed image data in the background image area; and
a module configured to code new image coefficients from the reconstructed image data.

13. The system of claim 12, wherein the background image and the foreground image occupy respective image areas.

**14.** The system of claim 12, wherein the plurality of image coefficients are wavelet coefficients.

**15.** The system of claim 12, further comprising:

a module configured to code the corrected reconstructed image data as a second plurality of image coefficients;
a module configured to cancel any second image coefficients associated with spatial areas occupied by the foreground image area; and
a module configured to include remaining second image coefficients in an output signal.

**16.** The system of claim 15, wherein prior to including the remaining second image coefficients in the output signal, the system corrects the remaining second image coefficients according to background image data.

**17.** The system of claim 12, wherein the image coefficients associated with spatial areas occupied by the foreground image that are cancelled are associated with a mask.

**18.** The system of claim 12, wherein the steps performed by the modules occur iteratively and wherein the image coefficients associated with spatial areas occupied by the foreground image that are cancelled are associated with a mask, the system further comprising:

a module configured to correct the reconstructed image data with original image data in un-masked image areas, the corrected reconstructed data to be used as image data to be coded in a subsequent iteration.

**19.** The system of claim 18, further comprising:

a module configured to output the wavelet coefficients of a final iteration as a coded data signal.

**20.** The system of claim 12, wherein the image coefficients are masked wavelets having at least half of the wavelet energy located below a mask.

**21.** The system of claim 12, wherein the steps performed by the modules are performed in a plurality of stages from a finest scale to a coarsest scale.

**22.** The system of claim 21, wherein at least one stage of coding comprises:

setting a resolution of the image to a scale of an instant stage;
generating transform coefficients representative of unmasked image data, the transform coefficients associated with the scale of the instant stage;
cancelling transform coefficients associated with a spatial area that coincides with a mask;
reconstructing image data based on the remaining coefficients; correcting image data by, for any portion of the reconstructed image data located outside of the mask, substituting the corresponding original image data therefor, and
repeating the generating, cancelling and reconstructing steps at least once unless the reconstructed image data outside of the mask converges to the corresponding original image data.

**Patentansprüche**

**1.** Verfahren zum Codieren eines Bildes unter Verwendung einer Wavelet-Codiertechnik, wobei das Bild ein als eine Vielzahl von Bildkoeffizienten codiertes Hintergrundbild und ein codiertes Vordergrundbild enthält, wobei das Verfahren **dadurch gekennzeichnet ist, dass** es Folgendes umfasst:

Wegkürzen von Bildkoeffizienten, die mit vom Vordergrundbild eingenommenen Raumflächen assoziiert sind;
Rekonstruieren von Bilddaten in beiden Bildflächen aus restlichen Koeffizienten;
Korrigieren von Bilddaten für die rekonstruierten Bilddaten in der Hintergrund-Bildfläche; und
Codieren von neuen Bildkoeffizienten aus den rekonstruierten Bilddaten.

**2.** Verfahren nach Anspruch 1, worin das Hintergrundbild und das Vordergrundbild jeweilige Bildflächen einnehmen.

**3.** Verfahren nach Anspruch 1, worin die Vielzahl von Bildkoeffizienten Wavelet-Koeffizienten sind.

**4.** Verfahren nach Anspruch 1, außerdem umfassend:

Codieren der korrigierten rekonstruierten Bilddaten als eine zweite Vielzahl von Bildkoeffizienten;
Wegkürzen von zweiten Bildkoeffizienten, die mit von der Vordergrund-Bildfläche eingenommenen Raumflächen assoziiert sind; und
Einbeziehen von restlichen zweiten Bildkoeffizienten in ein Ausgangssignal.

**5.** Verfahren nach Anspruch 4, worin vor dem Einbeziehen der restlichen zweiten Bildkoeffizienten in das Ausgangssignal die restlichen zweiten Bildkoeffizienten gemäß Hintergrund-Bilddaten korrigiert werden.

**6.** Verfahren nach Anspruch 1, worin die mit vom Vordergrundbild eingenommenen Raumflächen assoziierten Bildkoeffizienten, die weggekürzt werden, mit einer Maske assoziiert sind.

**7.** Verfahren nach Anspruch 1, worin die Schritte des Verfahrens iterativ ablaufen und worin die mit vom Vordergrundbild eingenommenen Raumflächen assoziierten Bildkoeffizienten, die weggekürzt werden, mit einer Maske assoziiert sind, wobei das Verfahren außerdem umfasst:

Korrigieren der rekonstruierten Bilddaten mit ursprünglichen Bilddaten in nicht maskierten Bildflächen, wobei die als Bilddaten zu verwendenden korrigierten rekonstruierten Daten in einer nachfolgenden Iteration zu codieren sind.

**8.** Verfahren nach Anspruch 7, außerdem umfassend:

Ausgeben der Wavelet-Koeffizienten einer letzten Iteration als ein codiertes Datensignal.

**9.** Verfahren nach Anspruch 1, worin die Bildkoeffizienten maskierte Wavelets sind, deren Wavelet-Energie mindestens zur Hälfte unter einer Maske angeordnet ist.

**10.** Verfahren nach Anspruch 1, worin die Schritte des Verfahrens in einer Vielzahl von Stufen von einer feinsten Skala zu einer gröbsten Skala ausgeführt werden.

**11.** Verfahren nach Anspruch 10, worin mindestens eine Codierstufe Folgendes umfasst:

Setzen einer Auflösung des Bildes auf eine Skala einer augenblicklichen Stufe;
Erzeugen von Transformationskoeffizienten, die für nicht maskierte Bilddaten repräsentativ sind, wobei die Transformationskoeffizienten mit der Skala der augenblicklichen Stufe assoziiert sind;
Wegkürzen von Transformationskoeffizienten, die mit einer mit einer Maske zusammenfallenden Raumfläche assoziiert sind;
Rekonstruieren von Bilddaten auf der Basis der restlichen Koeffizienten;
Korrigieren von Bilddaten, indem für jeden außerhalb der Maske angeordneten Teil der rekonstruierten Bilddaten die entsprechenden ursprünglichen Bilddaten substituiert werden; und
mindestens einmaliges Wiederholen der Erzeugungs-, Wegkürzungs- und Rekonstruierungsschritte, es sei denn, die rekonstruierten Bilddaten außerhalb der Maske konvergieren gegen die entsprechenden ursprünglichen Bilddaten.

**12.** System zum Codieren eines Bildes unter Verwendung einer Wavelet-Codiertechnik, wobei das Bild ein als eine Vielzahl von Bildkoeffizienten codiertes Hintergrundbild und ein codiertes Vordergrundbild enthält, wobei das System **dadurch gekennzeichnet ist, dass** es Folgendes umfasst:

ein Modul, konfiguriert zum Wegkürzen von allen Bildkoeffizienten, die mit vom Vordergrundbild eingenommenen Raumflächen assoziiert sind;
ein Modul, konfiguriert zum Rekonstruieren von Bilddaten in beiden Bildflächen aus restlichen Koeffizienten;
ein Modul, konfiguriert zum Korrigieren von Bilddaten für die rekonstruierten Bilddaten in der Hintergrund-Bildfläche; und
ein Modul, konfiguriert zum Codieren von neuen Bildkoeffizienten aus den rekonstruierten Bilddaten.

**13.** System nach Anspruch 12, worin das Hintergrundbild und das Vordergrundbild jeweilige Bildflächen einnehmen.

**14.** System nach Anspruch 12, worin die Vielzahl von Bildkoeffizienten Wavelet-Koeffizienten sind.

**15.** System nach Anspruch 12, außerdem umfassend:

ein Modul, konfiguriert zum Codieren der korrigierten rekonstruierten Bilddaten als eine zweite Vielzahl von Bildkoeffizienten;
ein Modul, konfiguriert zum Wegkürzen von zweiten Bildkoeffizienten, die mit von der Vordergrund-Bildfläche eingenommenen Raumflächen assoziiert sind; und
ein Modul, konfiguriert zum Einbeziehen von restlichen zweiten Bildkoeffizienten in ein Ausgangssignal.

**16.** System nach Anspruch 15, worin das System vor dem Einbeziehen der restlichen zweiten Bildkoeffizienten in das Ausgangssignal die restlichen zweiten Bildkoeffizienten gemäß Hintergrund-Bilddaten korrigiert.

**17.** System nach Anspruch 12, worin die mit vom Vordergrundbild eingenommenen Raumflächen assoziierten Bildkoeffizienten, die weggekürzt werden, mit einer Maske assoziiert sind.

**18.** System nach Anspruch 12, worin die von den Modulen ausgeführten Schritte iterativ ablaufen und worin die mit vom Vordergrundbild eingenommenen Raumflächen assoziierten Bildkoeffizienten, die weggekürzt werden, mit einer Maske assoziiert sind, wobei das System außerdem umfasst:

ein Modul, konfiguriert zum Korrigieren der rekonstruierten Bilddaten mit ursprünglichen Bilddaten in nicht maskierten Bildflächen, wobei die als Bilddaten zu verwendenden korrigierten rekonstruierten Daten in einer nachfolgenden Iteration zu codieren sind.

**19.** System nach Anspruch 18, außerdem umfassend:

ein Modul, konfiguriert zum Ausgeben der Wavelet-Koeffizienten einer letzten Iteration als ein codiertes Datensignal.

**20.** System nach Anspruch 12, worin die Bildkoeffizienten maskierte Wavelets sind, deren Wavelet-Energie mindestens zur Hälfte unter einer Maske angeordnet ist.

**21.** System nach Anspruch 12, worin die von den Modulen ausgeführten Schritte in einer Vielzahl von Stufen von einer feinsten Skala zu einer gröbsten Skala ausgeführt werden.

**22.** System nach Anspruch 21, worin mindestens eine Codierstufe Folgendes umfasst:

Setzen einer Auflösung des Bildes auf eine Skala einer augenblicklichen Stufe;
Erzeugen von Transformationskoeffizienten, die für nicht maskierte Bilddaten repräsentativ sind, wobei die Transformationskoeffizienten mit der Skala der augenblicklichen Stufe assoziiert sind;
Wegkürzen von Transformationskoeffizienten, die mit einer mit einer Maske zusammenfallenden Raumfläche assoziiert sind;
Rekonstruieren von Bilddaten auf der Basis der restlichen Koeffizienten;
Korrigieren von Bilddaten, indem für jeden außerhalb der Maske angeordneten Teil der rekonstruierten Bilddaten die entsprechenden ursprünglichen Bilddaten substituiert werden; und
mindestens einmaliges Wiederholen der Erzeugungs-, Wegkürzungs- und Rekonstruierungsschritte, es sei denn, die rekonstruierten Bilddaten außerhalb der Maske konvergieren gegen die entsprechenden ursprünglichen Bilddaten.

**Revendications**

**1.** Procédé de codage d'une image utilisant une technique de codage d'ondelettes, l'image comprenant une image d'arrière-plan codée en tant que pluralité de coefficients d'image et une image d'avant-plan codée, le procédé étant **caractérisé en ce qu'**il consiste à :

annuler tous les coefficients d'image associés à des zones spatiales occupées par l'image d'avant-plan ;
reconstruire les données d'image dans les deux zones d'image à partir des coefficients restants ;
corriger les données d'image pour les données d'image reconstruites de la zone d'image d'arrière-plan ; et
coder de nouveaux coefficients d'image à partir des données d'image reconstruites.

2. Procédé selon la revendication 1, dans lequel l'image d'arrière-plan et l'image d'avant-plan occupent des zones d'image respectives.

3. Procédé selon la revendication 1, dans lequel la pluralité de coefficients d'image sont des coefficients d'ondelettes.

4. Procédé selon la revendication 1, consistant en outre à :

coder les données d'image reconstruites corrigées en tant que deuxième pluralité de coefficients d'image ;
annuler les deuxièmes coefficients d'image associés à des zones spatiales occupées par la zone d'image d'avant-plan ; et
inclure les deuxièmes coefficients d'image restants dans un signal de sortie.

5. Procédé selon la revendication 4, dans lequel, avant d'inclure les deuxièmes coefficients d'image restants dans le signal de sortie, les deuxièmes coefficients d'image restants sont corrigés conformément à des données d'image d'arrière-plan.

6. Procédé selon la revendication 1, dans lequel les coefficients d'image associés à des zones spatiales occupées par l'image d'avant-plan qui sont annulés sont associés à un masque.

7. Procédé selon la revendication 1, dans lequel les étapes du procédé sont effectuées de manière itérative et dans lequel les coefficients d'image associés à des zones spatiales occupées par l'image d'avant-plan qui sont annulés sont associés à un masque, le procédé consistant en outre à :

corriger les données d'image reconstruites avec des données d'image d'origine dans les zones d'image non masquées, les données reconstruites corrigées à utiliser en tant que données d'image étant à coder au cours d'une itération suivante.

8. Procédé selon la revendication 7, consistant en outre à :

délivrer les coefficients d'ondelettes d'une itération finale en tant que signal de données codé.

9. Procédé selon la revendication 1, dans lequel les coefficients d'image sont des ondelettes masquées ayant au moins la moitié de l'énergie d'ondelette située au-dessous d'un masque.

10. Procédé selon la revendication 1, dans lequel les étapes du procédé sont effectuées dans une pluralité d'étages d'une échelle la plus fine à une échelle la plus grossière.

11. Procédé selon la revendication 10, dans lequel au moins un étage de codage consiste à :

fixer une résolution de l'image à une échelle d'un étage actuel ;
générer des coefficients de transformation représentatifs des données d'image non masquées, les coefficients de transformation étant associés à l'échelle de l'étage actuel ;
annuler les coefficients de transformation associés à une zone spatiale qui coïncide avec un masque;
reconstruire les données d'image sur la base des coefficients restants ;
corriger les données d'image en substituant, pour toute partie des données d'image reconstruites située à l'extérieur du masque, les données d'image d'origine correspondantes à celles-ci, et
répéter les étapes de génération, d'annulation et de reconstruction au moins une fois à moins que les données d'image reconstruites à l'extérieur du masque ne convergent vers les données d'image d'origine correspondantes.

12. Système pour coder une image en utilisant une technique de codage d'ondelettes, l'image comprenant une image d'arrière-plan codée en tant que pluralité de coefficients d'image et une image d'avant-plan codée, le système étant **caractérisé en ce qu'**il comprend :

un module configuré pour annuler tous les coefficients d'image associés à des zones spatiales occupées par l'image d'avant-plan ;

un module configuré pour reconstruire les données d'image dans les deux zones d'image à partir des coefficients restants ;

un module configuré pour corriger les données d'image pour les données d'image reconstruites dans la zone d'image d'arrière-plan ; et

un module configuré pour coder de nouveaux coefficients d'image à partir des données d'image reconstruites.

13. Système selon la revendication 12, dans lequel l'image d'arrière-plan et l'image d'avant-plan occupent des zones d'image respectives.

14. Système selon la revendication 12, dans lequel la pluralité de coefficients d'image sont des coefficients d'ondelettes.

15. Système selon la revendication 12, comprenant en outre :

un module configuré pour coder les données d'image reconstruites corrigées en tant que deuxième pluralité de coefficients d'image ;

un module configuré pour annuler les deuxièmes coefficients d'image associés à des zones spatiales occupées par la zone d'image d'avant-plan ; et

un module configuré pour inclure les deuxièmes coefficients d'image restants dans un signal de sortie.

16. Système selon la revendication 15, dans lequel, avant d'inclure les deuxièmes coefficients d'image restants dans le signal de sortie, le système corrige les deuxièmes coefficients d'image restants conformément à des données d'image d'arrière-plan.

17. Système selon la revendication 12, dans lequel les coefficients d'image associés à des zones spatiales occupées par l'image d'avant-plan qui sont annulés sont associés à un masque.

18. Système selon la revendication 12, dans lequel les étapes effectuées par les modules sont effectuées de manière itérative et dans lequel les coefficients d'image associés à des zones spatiales occupées par l'image d'avant-plan qui sont annulés sont associés à un masque, le système comprenant en outre :

un module configuré pour corriger les données d'image reconstruites avec des données d'image d'origine dans les zones d'image non masquées, les données reconstruites corrigées étant utilisées en tant que données d'image à coder dans une itération suivante.

19. Système selon la revendication 18, comprenant en outre :

un module configuré pour délivrer les coefficients d'ondelettes d'une itération finale en tant que signal de données codé.

20. Système selon la revendication 12, dans lequel les coefficients d'image sont des ondelettes masquées ayant au moins la moitié de l'énergie d'ondelette située au-dessous d'un masque.

21. Système selon la revendication 12, dans lequel les étapes effectuées par les modules sont effectuées dans une pluralité d'étages d'une échelle la plus fine à une échelle la plus grossière.

22. Système selon la revendication 21, dans lequel au moins un étage de codage consiste à :

fixer une résolution de l'image à une échelle d'un étage actuel ;

générer des coefficients de transformation représentatifs des données d'image non masquées, les coefficients de transformation étant associés à l'échelle de l'étage actuel ;

annuler les coefficients de transformation associés à une zone spatiale qui coïncide avec un masque;

reconstruire les données d'image sur la base des coefficients restants ;

corriger les données d'image en substituant, pour toute partie des données d'image reconstruites située à l'extérieur du masque, les données d'image d'origine correspondantes à celles-ci ; et

répéter les étapes de génération, d'annulation et de reconstruction au moins une fois à moins que les données d'image reconstruites à l'extérieur du masque ne convergent vers les données d'image d'origine correspondantes.

FIG. 1

ENCODER
100

300

DECODER
200

FIG. 4

STAGE 1

L 110

H 120

STAGE 2

L 110

H 120

STAGE n

L 110

H 120

FIG. 2(b)

FIG. 2(c)

FIG. 2(a)

# FIG. 3

[P]

Xi

Xi+1

Images matching the target image outside the mask

[Q]

X'i    X'i+1

Images whose wavelet coefficients are zero when the wavelet energy is substantial located below the mask.

# FIG. 5

[P]

[Q]

EP 1 847 962 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Oncologic Image Compression Using Both Wavelet And Masking Techniques. **Yin F-F et al.** Medical Physics. American Institute of Physics, 01 December 1997, vol. 24, 2038-2042